# EUROPEAN PATENT SPECIFICATION

(11) **EP 2 543 579 B1**
(45) Date of publication and mention of the grant of the patent: **27.04.2016**
(21) Application number: 12175216.6
(22) Date of filing: 05.07.2012
(51) Int. Cl.: B62J 6/18, B62K 19/32, B62K 21/02

(54) **Head tube assembly for a bicycle with cable access routing in an open steerer configuration**
Kopfrohranordnung für ein Fahrrad mit lateraler Öffnung des Kopfrohres zur Aufnahme von Leitungen und Bowdenzügen innerhalb des Rohres
Ensemble tube de tête pour une bicyclette ayant une ouverture latérale dudit tube, et permettant le passage de cables au sein du tube

(30) Priority: 05.07.2011 US 201161504428 P
(43) Date of publication of application: 09.01.2013
(73) Proprietor: Pon Bicycle Holding B.V., 6951 BP Dieren (NL)
(72) Inventor: Matthews, Richard Peter, Peterborough, ON, K9J 6M8 (CA); Pike, Robert James, Scarborough, ON, M1C 5C4 (CA)
(74) Representative: Evens, Paul Jonathan

(56) References cited:
- EP-A1- 1 529 724
- EP-A1- 1 529 725
- EP-A1- 1 787 899
- WO-A1-2009/146552
- FR-A1- 2 864 938
- US-A1- 2006 061 057

## Description

### FIELD OF THE INVENTION

This invention relates to wheeled vehicles or cycles, and more particularly to a head tube assembly with an open steerer configuration for a bicycle.

Document US 2006/061057 A1 discloses such a cycle assembly according to the respective preambles of claims 1 and 7.

### BACKGROUND OF THE INVENTION

Bicycle designers continue trying to reduce the aerodynamic drag of bicycles in order to increase riders speed and reduce rider fatigue. In addition to tube shapes, the routing of control cables can be changed to reduce their interaction with air flow against and around the bicycle and thereby reduce the effects of drag.

Attempts have been made in the art to reduce cable drag by routing one or more cables internally through the bicycle frame. Most known approaches involve providing a hole on the side of steerer tube between the upper and lower bearings and routing the cables through the hole in the steerer tube and into the interior of the bicycle frame and then out respective holes proximate to the components, each brakes, gear derailleur's. Difficulty with the internal routing of cables arises at assemblies or junctions that move or rotate, most notably, the head tube and steerer tube assembly. The known approaches have to deal with the rotation of the internally routed cables as the fork assembly is turned, with the steerer tube rotating relative to the stationary hole on the head tube. The cables routed through the hole can limit the motion of the steerer tube and can also be damaged by the hole as a result of over rotation. The cables will also tend to move inside the steerer tube as the steer tube is rotated, i.e. as the rider turns the bicycle by moving the handlebars. This can cause the derailleur to move.

Accordingly, there remains a need for improvement in the art.

### BRIEF SUMMARY OF THE INVENTION

The present invention is directed to a head tube assembly with an open steerer configuration for a bicycle.

According to one embodiment, the present invention comprises a head tube assembly for use with a bicycle frame, the head tube assembly comprising a head tube configured for adjoining to a top tube and to a down tube in the bicycle frame; the head tube including a lower bearing component and an upper bearing component, the lower and upper bearings being configured for rotatably engaging a fork assembly, the fork assembly comprising an external steerer configured to rotate externally to the head tube; an upper steerer section configured to secure the external steerer; and an internal chamber configured with an aperture for receiving one or more cables, and the internal chamber being coupled to the top tube or to the down tube for routing the one or more cables through the interior section of the top tube or the down tube.

According to another embodiment, the present invention comprises a cycle frame comprising: a bottom bracket; a top tube, a head tube, a down tube and a seat tube; one end of the top tube and one end of the down tube being affixed to the head tube, and another end of the top tube being affixed to one end of the seat tube; first and second seat stays, and first and second chain stays, and one end of each of the seat stays being affixed to the seat tube, and another end of each of the seat stays being affixed to respective ends of the chain stays; another end of the down tube and another end of the seat tube and another end of each of the chain stays forming a juncture for connecting or affixing the bottom bracket; the head tube including a lower bearing component and an upper bearing component, the lower and upper bearing components being configured for rotatably engaging a fork assembly, the fork assembly comprising an external steerer configured to rotate externally to the head tube; an upper steerer section configured to secure the external steerer; and the head tube assembly including an internal chamber configured with an aperture for receiving one or more cables, the said internal chamber being coupled to the top tube or to the down tube for routing said one or more cables through the interior space of the top tube or the down tube.

Other aspects and features of the present invention will become apparent to those ordinarily skilled in the art upon review of the following exemplary embodiments of the invention in conjunction with the accompanying figures.

### BRIEF DESCRIPTION OF THE DRAWINGS

Reference will now be made to the accompanying drawings, which show by way of example, embodiments according to the present invention, and in which:
Fig. 1 shows a head tube assembly and fork for a bicycle with an open steerer configuration according to an embodiment of the present invention.
Fig. 2 shows a compression adjustment cup which adjusts the location of the upper head tube bearing according to an embodiment of the present invention.

Like reference numerals indicate like elements or components in the drawings.

### DETAILED DESCRIPTION OF THE EMBODIMENTS

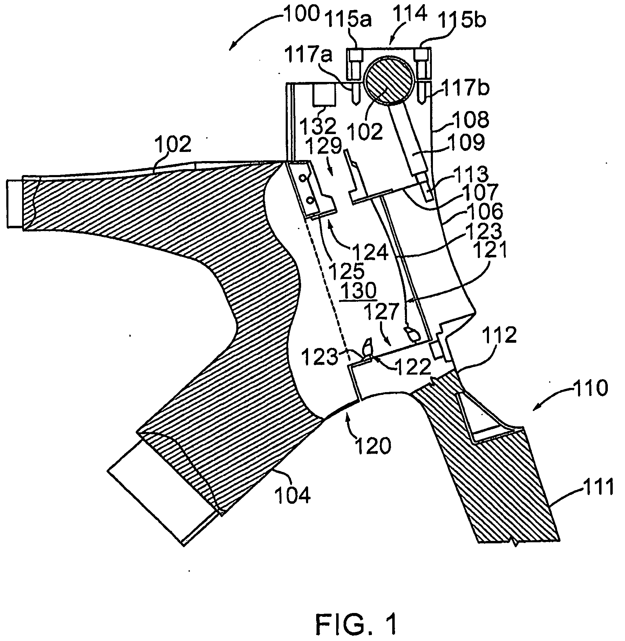

Reference is first made to Fig. 1, which shows a front section of a bicycle frame indicated generally by reference 100 with a head tube assembly and fork with an open steerer configuration according to an embodiment of the present invention and indicated generally by reference 120. In Fig. 1, the head tube section and fork assembly are shown in a partial cut-away or sectional view along a line that bisects the head tube assembly and the fork assembly. While embodiments according to the present invention are described in the context of a bicycle, it will be appreciated and understood that the invention may be suitable for other frame geometries or wheeled vehicle configurations with a rotatable head assembly.

The front section of bicycle frame 100 as depicted in Fig. 1 comprises a top tube 102 and a down tube 104. The top tube 102 is connected to the down tube 104 and a head tube 121 in the head tube assembly 120 using known techniques. As shown in Fig. 1, the front section of the bicycle frame 100 includes an external steerer tube indicated generally by reference 106 and an upper steerer section indicated generally by reference 108. The bicycle frame 100 also includes a fork assembly indicated generally by reference 110. The fork assembly 110 comprises a fork 111 and a fork head or crown 112. According to an embodiment, the fork head 112 is integrated or combined with the external steerer tube 106 wherein the head tube assembly 120 does not include a conventional internal steering tube or axle. The external steerer tube 106 can comprise an integrated component with the fork head 112 or a separate component that is connected or otherwise joined to the fork head 112. The fork head 112 is adjoined or otherwise affixed to the forks 111 in known manner, which are configured at their respective lower ends to receive the axle of the front wheel. According to an embodiment, the head tube assembly 120 comprises a head tube indicated generally by reference 121, which is affixed or otherwise connected to the respective ends of the top tube 102 and the down tube 104.

As depicted in Fig. 1, the head tube assembly 120 (i.e. the head tube 121) is configured with a lower bearing 122 and an upper bearing 124. The head tube bearings 122, 124 are held in place with respective tabs 123 and 125. The head tube bearings 122, 124 can also be held in place using indents, races or other types of guides or holders incorporated into the head tube 120 and/or fork assembly 110. According to exemplary implementation, the external steerer tube 106 includes a bearing plate or tab indicated generally by reference 107. The bearing plate 107 is configured to rotatably couple or engage the external steerer tube 106 to the upper head tube bearing 124, for example, with a matching bearing race or bearing cup, and according to one implementation is further secured by the upper steerer section 108.

As shown in Fig. 1, the upper steerer section 108 is connected or clamped to the fork head 112 using a bolt or other type of threaded fastener indicated generally by reference 109 which is screwed into a threaded socket 113 in the fork head 112. As also shown in Fig. 1, the upper steerer section 108 is configured to receive a handle bar clamp indicated generally by reference 114. The handle bar clamp 114 is clamped or attached to upper steerer section 108 with one or more bolts or threaded fasteners 115a, 115b that are screwed into threaded sockets 117a, 117b in the upper steerer section 108. The handle bar clamp 114 securely clamps a handle bar 102.

According to another aspect, the head tube 121 has a curvature on the outside surface indicated generally by reference 123. The curvature 123 provides some clearance between the head tube 121 and the fork head or crown 112 when the upper steering section 108 and fork assembly 110 are turned by rotating the handlebars 102.

As described above, the upper steerer section 108 is removable. To assemble the head tube assembly 120 and the fork assembly 110 according to an exemplary implementation, the fork head crown 112 is inserted into the lower end of the head tube 121 and coupled or mated (i.e. with a mating bearing cup, bearing race or other engageable coupler) with the lower bearing 122 in the head tube 121 and then the external steerer tube 106 is coupled to the upper bearing 124, with the bearing plate 107 (and a mating bearing cup or race), and the upper steerer section 108 is attached to secure the assembly.

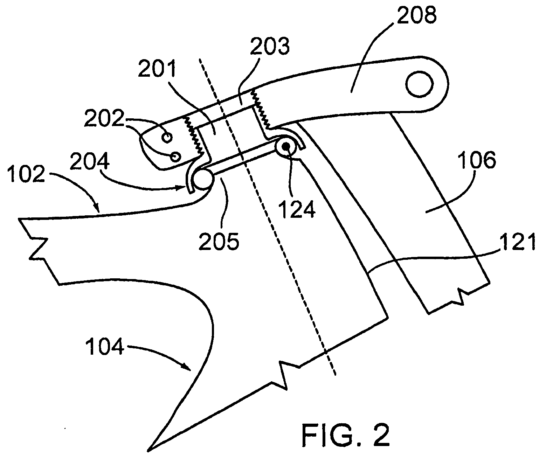

Fig. 2 illustrates a method of securing the upper head tube bearing 124 and adjusting the compression on the bearings 122, 124 in order to hold the bearings in place and secure the fork 111 to the frame 100 according to an embodiment of the present invention. Fig. 2 shows a split stem 208 including pinch bolts 202 to adjust compression on the split and a threaded hole 203 through the stem above the head tube 121. A threaded tube 201 with external threads is provided to mate with the threaded hole 203 through the stem and includes an annular cup or race 204 at the bottom end to mate with the upper head tube bearing 124 in order to hold the bearing in place against a cone 205 moulded to the head tube 121. The threaded tube 201 may be rotated within the stem 208 to adjust its height and therefore the distance between the upper and lower bearings 122, 124 and the pressure on them. Once an adjustment is made the pinch bolts 202 may be tightened to prevent further rotation of the threaded tube 201.

In known manner, a complete bicycle frame is assembled by connecting the other end of the top tube 102 to a seat tube (not shown). The other end of the seat tube is connected or affixed to the other end of the down tube 104 and to a bottom bracket assembly (not shown). The bottom bracket assembly is configured to receive a pedal crank assembly (not shown). The bicycle frame further comprises a pair of chain stays (not shown) and a pair of seat stays (not shown). The tube and frame components for the bicycle frame are affixed or adjoined using known techniques, such as welding or detachable fasteners, etc., to form the complete bicycle frame, as will be familiar to one skilled in the art. The bicycle frame is completed with the head tube and fork assembly as described above, front and rear wheels, and a component set (e.g. gears, derailleur's, brakes, etc.).

Reference is made back to Fig. 1. The configuration of the head tube assembly 120 according to an embodiment of the present invention provides an internal chamber or cavity inside the head tube assembly 120. The internal chamber or cavity inside the head tube assembly 120 is indicated generally by reference 130. In accordance with the embodiment, the steerer tube or axle is eliminated from the head tube assembly 120, and the internal chamber 130 comprises an unobstructed cavity and is unimpeded by any rotating steering mechanism shafts or tubes as found in conventional bicycle designs. This configuration substantially eliminates interference between the steering mechanism and internal routing of cables and wires. In this way, cables (e.g. braking cables, gear shifter cables, computer and other sensor cables) are easily routed within the head tube assembly 120 without interference from the steerer tube or axle. As shown in Fig. 1, the upper steerer section 108 includes a hole or aperture indicated generally by reference 132 for routing cables into and out from the internal chamber 130 and the other tubes forming the bicycle frame. As also shown, the upper and lower bearings 124 and 122 have an open bore or void indicated by references 129 and 127, respectively. The open bore 129 in the upper bearing 124 allows cables, tubes and/or wires, to be routed from the upper steerer section 108 (i.e. through the hole 132) into the internal chamber 130 and then further down through the down tube 104, for example, to the pedal crank assembly, front and/or rear derailleur's, and/or rear brake components, or to other sections of the frame or bicycle. Similarly, the open bore 127 through the lower bearing 122 allows cable(s), tubes and/or wires, to be routed from/to the upper steerer section 108 and through the fork 111 to components configured with the front wheel, for example, front brake cable(s), computer speed or other sensor cable(s).

According to another embodiment, the hole 132 may be located in other sections or portions of the head tube assembly 120 that are adjacent to, or in communication with, the internal chamber 130. According to another aspect, more than one hole, slot or aperture can be provided for routing cables or wires into and out from the internal chamber 130 and the interior of the tubes forming the bicycle frame.

In summary and according to an embodiment, there is provided a head tube assembly for use with a bicycle frame, said head tube assembly comprising a head tube configured for adjoining to a top tube and to a down tube in the bicycle frame; said head tube including a lower bearing component and an upper bearing component, said lower and upper bearings being configured for rotatably engaging a fork assembly, said fork assembly comprising an external steerer configured to rotate externally to said head tube; an upper steerer section configured to secure said external steerer; and an internal chamber configured with an aperture for receiving one or more cables, and said internal chamber being coupled to said top tube or to said down tube for routing said one or more cables through the interior space of said top tube or said down tube.

In summary and according to another embodiment, there is provided a cycle frame comprising: a bottom bracket; a top tube, a head assembly, a down tube and a seat tube; one end of said top tube and one end of said down tube being affixed to said head tube, and another end of said top tube being affixed to one end of said seat tube; first and second seat stays, and first and second chain stays, and one end of each of said seat stays being affixed to said seat tube, and another end of each of said seat stays being affixed to respective ends of said chain stays; another end of said down tube and another end of said seat tube and another end of each of said chain stays forming a juncture for connecting to said bottom bracket; and said head tube assembly comprising said head tube including a lower bearing component and an upper bearing component, said lower and upper bearings being configured for rotatably engaging a fork assembly, said fork assembly comprising an external steerer configured to rotate externally to said head tube; an upper steerer section configured to secure said external steerer; and said head tube assembly including an internal chamber configured with an aperture for receiving one or more cables, and said internal chamber being coupled to said top tube or to said down tube for routing said one or more cables through the interior space of said top tube or said down tube.

The present invention may be embodied in other specific forms without departing from its spirit or essential characteristics. The embodiments described and disclosed are to be considered in all aspects only as illustrative and not restrictive. The scope of the invention is, therefore, indicated by the appended claims rather than by the foregoing description.

## Claims

1. A head tube assembly (121) for use with a bicycle frame (100), said head tube assembly (121) comprising:
a head tube (121) configured for adjoining to a top tube (102) and to a down tube (104) in the bicycle frame (100);
said head tube (121) including a lower bearing component (122) and an upper bearing component (124), said lower and upper bearings (122,124) being configured for rotatably engaging a fork assembly (110),
**characterised in that** said fork assembly (110) comprises an external steerer (106) configured to rotate externally to said head tube (121), and **in that** the head tube assembly (121) further comprises:
an upper steerer section (108) configured to secure said external steerer (106); and
an internal chamber (130) configured with an aperture (132) for receiving one or more cables, and said internal chamber (130) being coupled to said top tube (102) or to said down tube (104) for routing said one or more cables through the interior space of said top tube (102) or said down tube (104).

2. The head tube assembly (121) as claimed in claim 1, wherein said internal chamber (130) comprises an internal cavity unobstructed by a steering mechanism.

3. The head tube assembly (121) as claimed in claim 1, wherein said lower bearing component (122) is configured to provide a path for routing said one or more cables from said internal chamber (130) through said fork assembly (110).

4. The head tube assembly (121) as claimed in claim 1, wherein said head tube (121) comprises a curved profile (123), and said curved profile (123) being configured to provide clearance between said head tube (121) and said external steerer (106).

5. The head tube assembly (121) as claimed in claim 1, wherein said aperture (132) is configured in said upper steerer section (108) and said upper bearing component (124) includes a bore (129) for routing said one or more cables from said aperture (132) and through said upper bearing component (124) into said internal chamber (132).

6. The head tube assembly (121) as claimed in claim 5, wherein said one or more cables comprise one of a gear shifter cable, a brake cable and a sensor cable.

7. A cycle frame (100) comprising:
a bottom bracket;
a top tube (102), a head tube assembly (120) comprising a head tube (121), a down tube (104) and a seat tube;
one end of said top tube (102) and one end of said down tube (104) being affixed to said head tube (121), and another end of said top tube (102) being affixed to one end of said seat tube;
first and second seat stays, and first and second chain stays, and one end of each of said seat stays being affixed to said seat tube, and another end of each of said seat stays being affixed to respective ends of said chain stays;
another end of said down tube (104) and another end of said seat tube and another end of each of said chain stays forming a juncture for connecting to said bottom bracket; and
said head tube (121) including a lower bearing component (122) and an upper bearing component (124), said lower and upper bearings (122,124) being configured for rotatably engaging a fork assembly (110),
**characterised in that**: said fork assembly (110) comprises an external steerer (106) configured to rotate externally to said head tube (121), with the cycle frame (100) further comprising an upper steerer section (108) configured to secure said external steerer (106); and said head tube assembly (120) includes an internal chamber (130) configured with an aperture (132) for receiving one or more cables, and said internal chamber (132) being coupled to said top tube (102) or to said down tube (104) for routing said one or more cables through the interior space of said top tube (102) or said down tube (104).

8. The cycle frame (100) as claimed in claim 7, wherein said internal chamber (132) comprises an internal cavity unobstructed by a steering mechanism.

9. The cycle frame (100) as claimed in claim 7, wherein said lower bearing component (122) is configured to provide a path for routing said one or more cables from said internal chamber (130) through said fork assembly (110).

10. The cycle frame (100) as claimed in claim 7, wherein said head tube (121) comprises a curved exterior profile (123), and said curved exterior profile (123) being configured to provide clearance between said head tube (121) and said external steerer (106).

11. The cycle frame (100) as claimed in claim 7, wherein said aperture (132) is configured in said upper steerer section (108) and said upper bearing component (124) includes a bore (129) for routing said one or more cables from said aperture (132) and through said upper bearing component (124) into said internal chamber (132) through said top tube (102) or said down tube (104) to other sections of the cycle frame.

12. The head tube assembly (120) as claimed in claim 1, wherein said upper bearing component (124) is held in place by a race or cup (204) located at a lower end of a threaded tube (201), said threaded tube (201) including external threads extending upwardly from said upper bearing component (124) into a threaded hole (203) in a stem (208), said threaded hole (203) including internal threads that mate with the external threads of the threaded tube (201) such that the distance between the upper and lower bearings (122,124) can be adjusted by rotating the threaded tube (201) in the stem (208).

## Patentansprüche

1. Steuerrohrbaugruppe (121) zur Verwendung mit einem Fahrradrahmen (100), wobei die genannte Steuerrohrbaugruppe (121) Folgendes umfasst:
ein Steuerrohr (121), konfiguriert zum Anfügen an ein Oberrohr (102) und ein Unterrohr (104) in dem Fahrradrahmen (100) ;
wobei das genannte Steuerrohr (121) eine untere Lagerkomponente (122) und eine obere Lagerkomponente (124) aufweist, wobei das genannte untere und obere Lager (122, 124) zum drehbaren Eingreifen in eine Gabelbaugruppe (110) konfiguriert sind,
**dadurch gekennzeichnet, dass** die genannte Gabelbaugruppe (110) einen externen Lenker (106) umfasst, der zum Drehen außerhalb des genannten Steuerrohrs (121) konfiguriert ist, und dadurch, dass die Steuerrohrbaugruppe (121) ferner Folgendes umfasst:
einen oberen Lenkerabschnitt (108), der zum Befestigen des genannten externen Lenkers (106) konfiguriert ist; und
eine Innenkammer (130), die mit einem Durchlass (132) zum Aufnehmen von einem oder mehreren Kabeln konfiguriert ist, wobei die genannte Innenkammer (130) mit dem genannten Oberrohr (102) oder dem genannten Unterrohr (104) zum Leiten der genannten ein oder mehreren Kabel durch den Innenraum des Oberrohrs (102) oder des Unterrohrs (104) gekoppelt ist.

2. Steuerrohrbaugruppe (121) nach Anspruch 1, wobei die genannte Innenkammer (130) einen durch einen Lenkmechanismus unbehinderten inneren Hohlraum umfasst.

3. Steuerrohrbaugruppe (121) nach Anspruch 1, wobei die genannte untere Lagerkomponente (122) zum Bilden eines Pfades zum Leiten der genannten ein oder mehreren Kabel von der genannten Innenkammer (130) durch die genannte Gabelbaugruppe (110) konfiguriert ist.

4. Steuerrohrbaugruppe (121) nach Anspruch 1, wobei das genannte Steuerrohr (121) ein gekrümmtes Profil (123) hat und das genannte gekrümmte Profil (123) zum Erzeugen eines Freiraums zwischen dem genannten Steuerrohr (121) und dem genannten externen Lenker (106) konfiguriert ist.

5. Steuerrohrbaugruppe (121) nach Anspruch 1, wobei die genannte Öffnung (132) in dem genannten oberen Lenkerabschnitt (108) konfiguriert ist und die genannte obere Lagerkomponente (124) eine Bohrung (129) zum Leiten der genannten ein oder mehreren Kabel von dem genannten Durchlass (132) und durch die genannte Lagerkomponente (124) in die genannte Innenkammer (132) aufweist.

6. Steuerrohrbaugruppe (121) nach Anspruch 5, wobei die genannten ein oder mehreren Kabel eines aus einem Gangschaltungskabel, einem Bremskabel und einem Sensorkabel umfassen.

7. Fahrradrahmen (100), der Folgendes umfasst:
eine untere Halterung;
ein Oberrohr (102), eine Steuerrohrbaugruppe (120), die ein Steuerrohr (121), ein Unterrohr (104) und ein Sitzrohr umfasst;
wobei ein Ende des genannten Oberrohrs (102) und ein Ende des genannten Unterrohrs (104) an dem genannten Steuerrohr (121) befestigt sind und ein anderes Ende des genannten Oberrohrs (102) an einem Ende des genannten Sitzrohrs befestigt ist;
eine erste und zweite Sattelstrebe sowie eine erste und zweite Kettenstrebe, wobei ein Ende jeder der genannten Sattelstreben an dem genannten Sitzrohr befestigt ist und ein anderes Ende jeder der genannten Sattelstreben an jeweiligen Enden der genannten Kettenstreben befestigt ist;
wobei ein anderes Ende des genannten Unterrohrs (104) und ein anderes Ende des genannten Sitzrohrs und ein anderes Ende jeder der genannten Kettenstreben einen Verbindungspunkt zum Verbinden mit der genannten unteren Halterung bilden; und
wobei das genannte Steuerrohr (121) eine untere Lagerkomponente (122) und eine obere Lagerkomponente (124) aufweist, wobei das genannte untere und obere Lager (122, 124) zum drehbaren Eingreifen in eine Gabelbaugruppe (110) konfiguriert sind,
**dadurch gekennzeichnet, dass** die genannte Gabelbaugruppe (110) einen externen Lenker (106) umfasst, der zum Drehen außerhalb des genannten Steuerrohrs (121) konfiguriert ist, wobei der Fahrradrahmen (100) ferner einen oberen Lenkerabschnitt (108) umfasst, der zum Befestigen des genannten externen Lenkers (106) konfiguriert ist, und die genannte Steuerrohrbaugruppe (120) eine Innenkammer (130) aufweist, die mit einem Durchlass (132) zum Aufnehmen von einem oder mehreren Kabeln konfiguriert ist, und wobei die genannte Innenkammer (132) mit dem genannten Oberrohr (102) oder dem genannten Unterrohr (104) zum Leiten der genannten ein oder meheren Kabel durch den Innenraum des genannten Oberrohrs (102) oder des genannten Unterrohrs (104) gekoppelt ist.

8. Fahrradrahmen (100) nach Anspruch 7, wobei die genannte Innenkammer (132) einen nicht durch einen Lenkmechanismus behinderten inneren Hohlraum umfasst.

9. Fahrradrahmen (100) nach Anspruch 7, wobei die genannte untere Lagerkomponente (122) zum Erzeugen eines Pfades zum Leiten der genannten ein oder mehreren Kabel von der genannten Innenkammer (130) durch die genannte Gabelbaugruppe (110) konfiguriert ist.

10. Fahrradrahmen (100) nach Anspruch 7, wobei das genannte Steuerrohr (121) ein gekrümmtes Außenprofil (123) hat und wobei das genannte gekrümmte Außenprofil (123) zum Erzeugen eines Freiraums zwischen dem genannten Steuerrohr (121) und dem genannten externen Lenker (106) konfiguriert ist.

11. Fahrradrahmen (100) nach Anspruch 7, wobei der genannte Durchlass (132) in dem genannten oberen Lenkerabschnitt (108) konfiguriert ist und die genannte obere Lagerkomponente (124) eine Bohrung (129) zum Leiten der genannten ein oder mehreren Kabel von dem genannten Durchlass (132) und durch die genannte obere Lagerkomponente (124) in die genannte Innenkammer (132) durch das genannte Oberrohr (102) oder das genannte Unterrohr (104) zu anderen Abschnitten des Fahrradrahmens beinhaltet.

12. Steuerrohrbaugruppe (120) nach Anspruch 1, wobei die genannte obere Lagerkomponente (124) von einem Laufring oder Becher (204) festgehalten wird, der sich an einem unteren Ende eines Gewinderohrs (201) befindet, wobei das genannte Gewinderohr (201) ein Außengewinde aufweist, das von der genannten oberen Lagerkomponente (124) aufwärts in ein Gewindeloch (203) in einem Schaft (208) verläuft, wobei das genannte Gewindeloch (203) ein Innengewinde aufweist, das zum Außengewinde des Gewinderohrs (201) passt, so dass der Abstand zwischen dem oberen und unteren Lager (122, 124) durch Drehen des Gewinderohrs (201) in dem Schaft (208) justiert werden kann.

## Revendications

1. Ensemble de tube de direction (121) destiné à être utilisé avec un cadre de bicyclette (100), ledit ensemble de tube de direction (121) comprenant :
un tube de direction (121) configuré pour se raccorder à un tube supérieur (102) et à un tube inférieur (104) dans le cadre de bicyclette (100) ;
ledit tube de direction (121) comportant un composant de palier inférieur (122) et un composant de palier supérieur (124), lesdits paliers inférieur et supérieur (122, 124) étant configurés pour se mettre en prise en rotation avec un ensemble de fourche (110),
**caractérisé en ce que** ledit ensemble de fourche (110) comprend un pivot de fourche externe (106) configuré pour tourner extérieurement audit tube de direction (121), et **en ce que** l'ensemble de tube de direction (121) comprend en outre :
une section de pivot de fourche supérieure (108) configurée pour fixer ledit pivot de fourche externe (106) ; et
une chambre interne (130) configurée avec une ouverture (132) pour recevoir un ou plusieurs câbles, et ladite chambre interne (130) étant couplée audit tube supérieur (102) ou audit tube inférieur (104) pour acheminer lesdits un ou plusieurs câbles à travers l'espace intérieur dudit tube supérieur (102) ou dudit tube inférieur (104).

2. Ensemble de tube de direction (121) selon la revendication 1, dans lequel ladite chambre interne (130) comprend une cavité interne non obstruée par un mécanisme de direction.

3. Ensemble de tube de direction (121) selon la revendication 1, dans lequel ledit composant de palier inférieur (122) est configuré pour fournir un chemin pour l'acheminement desdits un ou plusieurs câbles depuis ladite chambre interne (130) à travers ledit ensemble de fourche (110).

4. Ensemble de tube de direction (121) selon la revendication 1, dans lequel ledit tube de direction (121) comprend un profil courbe (123), et ledit profil courbe (123) étant configuré pour fournir un jeu entre ledit tube de direction (51) et ledit pivot de fourche externe (106).

5. Ensemble de tube de direction (121) selon la revendication 1, dans lequel ladite ouverture (132) est configurée dans ladite section de pivot de fourche supérieure (108) et ledit composant de palier supérieur (124) comporte un alésage (129) pour acheminer lesdits un ou plusieurs câbles depuis ladite ouverture (132) et à travers ledit composant de palier supérieur (124) jusque dans ladite chambre interne (132).

6. Ensemble de tube de direction (121) selon la revendication 5, dans lequel lesdits un ou plusieurs câbles comprennent l'un d'un câble de changement de vitesses, d'un câble de frein et d'un câble de capteur.

7. Cadre de bicyclette (100) comprenant :
un jeu de pédalier ;
un tube supérieur (102), un ensemble de tube de direction (120) comprenant un tube de direction (121), un tube inférieur (104) et un tube de selle ;
une extrémité dudit tube supérieur (102) et une extrémité dudit tube inférieur (104) étant fixées audit tube de direction (121), et une autre extrémité dudit tube supérieur (102) étant fixée à une extrémité dudit tube de selle ;
des premier et second haubans, et des première et seconde bases, et une extrémité de chacun desdits haubans étant fixée audit tube de selle, et une autre extrémité de chacun desdits haubans étant fixée à des extrémités respectives desdites bases ;
une autre extrémité dudit tube inférieur (104) et une autre extrémité dudit tube de selle et une autre extrémité de chacune desdites bases formant une jonction destinée à être raccordée audit jeu de pédalier ; et
ledit tube de direction (121) comportant un composant de palier inférieur (122) et un composant de palier supérieur (124), lesdits paliers inférieur et supérieur (122, 124) étant configurés pour se mettre en prise en rotation avec un ensemble de fourche (110),
**caractérisé en ce que** : ledit ensemble de fourche (110) comprend un pivot de fourche externe (106) configuré pour tourner extérieurement audit tube de direction (121), le cadre de bicyclette (100) comprenant en outre une section de pivot de fourche supérieure (108) configurée pour fixer ledit pivot de fourche externe (106) ; et ledit ensemble de tube de direction (120) comporte une chambre interne (130) configurée avec une ouverture (132) pour recevoir un ou plusieurs câbles, et ladite chambre interne (132) étant couplée audit tube supérieur (102) ou audit tube inférieur (104) pour acheminer lesdits un ou plusieurs câbles à travers l'espace intérieur dudit tube supérieur (102) ou dudit tube inférieur (104).

8. Cadre de bicyclette (100) selon la revendication 7, dans lequel ladite chambre interne (132) comprend une cavité interne non obstruée par un mécanisme de direction.

9. Cadre de bicyclette (100) selon la revendication 7, dans lequel ledit composant de palier inférieur (122) est configuré pour fournir un chemin pour l'acheminement desdits un ou plusieurs câbles depuis ladite chambre interne (130) à travers ledit ensemble de fourche (110).

10. Cadre de bicyclette (100) selon la revendication 7, dans lequel ledit tube de direction (121) comprend un profil extérieur courbe (123), et ledit profil extérieur courbe (123) étant configuré pour fournir un jeu entre ledit tube de direction (121) et ledit pivot de fourche externe (106).

11. Cadre de bicyclette (100) selon la revendication 7, dans lequel ladite ouverture (132) est configurée dans ladite section de pivot de fourche supérieure (108) et ledit composant de palier supérieur (124) comporte un alésage (129) pour acheminer lesdits un ou plusieurs câbles depuis ladite ouverture (132) et à travers ledit composant de palier supérieur (124) jusque dans ladite chambre interne (132) à travers ledit tube supérieur (102) ou ledit tube inférieur (104) vers d'autres sections du cadre de bicyclette.

12. Ensemble de tube de direction (120) selon la revendication 1, dans lequel ledit composant de palier supérieur (124) est maintenu en place par une bague ou cuvette (204) située à une extrémité inférieure d'un tube fileté (201), ledit tube fileté (201) comportant des filets externes s'étendant vers le haut depuis ledit composant de palier supérieur (124) jusque dans un trou fileté (203) dans une potence (208), ledit trou fileté (203) comportant des filets internes qui s'accouplent avec les filets externes du tube fileté (201) de telle sorte que la distance entre les paliers supérieur et inférieur (122, 124) puisse être ajustée en tournant le tube fileté (201) dans la potence (208).
